# EUROPEAN PATENT APPLICATION

(11) **EP 3 854 522 A1**
(43) Date of publication of application: **28.07.2021**
(21) Application number: 20870447.8
(22) Date of filing: 14.10.2020
(51) Int. Cl.: B24B 19/14, B24B 19/00

(54) **FLEXIBLE AUTOMATIC GRINDING DEVICE AND GRINDING METHOD FOR AIRCRAFT REPAIRING COMPOSITE MATERIAL**

(30) Priority: 14.12.2019 CN 201911287212
(71) Applicant: Shanghai Hangyi Hi Tech Development Research Institute Co., Ltd., Shanghai 200433 (CN)
(72) Inventor: KAN, Yan, Shanghai 200433 (CN); WANG, Weiguo, Shanghai 200433 (CN); JI, Guoliang, Shanghai 200433 (CN); SUN, Tao, Shanghai 200433 (CN); YAO, Xucheng, Shanghai 200433 (CN)
(74) Representative: Prinz & Partner mbB
(86) International application number: PCT/CN2020/120783
(87) International publication number: WO 2021/114855

(57) **Abstract**

An apparatus for grinding automatically and flexibly a composite material for aircraft repair, and a method for applying the same, which relate to the technical field of grinding composite materials. The apparatus includes a movable platform, a collaborative robot, a floating force-sensitive grinding head mechanism, a dust collector, and a control component. The collaborative robot includes a six-axis mechanical arm, a six-axis force sensor, a robot controller, and a teach pendant. The floating force-sensitive grinding head mechanism includes a floating constant-force apparatus, a pneumatic spindle, an interface for mounting a cutter and automatically switching cutters, and a cutter holder with a grinding wheel and a sandpaper. The dust collector includes a dust-collecting host, and a dust-collecting hood mounted at an end of the six-axis mechanical arm. The dust-collecting hood is of an elastic cone structure made of a transparent plastic film. Unidirectional holes for guiding air into the dust-collecting hood are uniformly distributed on an outer surface of the dust-collecting hood. A rubber strip is mounted at an edge of the dust-collecting hood. Operation processes involved in repairing composite materials, such as grinding, removal, and polishing, are automated or semi-automated. Manual workload is lessened, health hazards of the personnel are reduced, and a quality of repair is improved.

## Description

The present application claims the priority to Chinese Patent Application No. 201911287212.1, titled "APPARATUS FOR GRINDING AUTOMATICALLY AND FLEXIBLY COMPOSITE MATERIAL FOR AIRCRAFT REPAIR, AND METHOD FOR APPLYING THE SAME", filed on December 14, 2019 with the China National Intellectual Property Administration, which is incorporated herein by reference in its entirety.

### FIELD

The present disclosure relates to the technical field of composite material grinding, and in particular to an apparatus for grinding automatically and flexibly a composite material for aircraft repair and a method for applying the apparatus.

### BACKGROUND

Composite materials are increasingly applied in fields such as aviation and aerospace, due to various advantages such as good thermal stability, high specific strength, and high specific rigidity. For example, the composite materials have been widely used on wings, aircraft fuselages, radomes, and other components of aircrafts. Such wide application brings corresponding maintenance issues.

The wings, the fuselage, the radome, and other components made of composite materials are apt to be damaged during service of an aircraft. The damages have to be repaired due to their influences on structural strength and flight performances of the aircraft. During the repair, the damaged part is removed first through grinding, forming concave that is to be repaired. A patch fitting the concave is prepared through grinding. Then, the patch is pasted to the concave via an auxiliary material, by using a device such as a hot bonder. The repair surface is polished after the materials are solidified. Currently, the grinding, removal, polishing, and other operations in the repair are all manually performed. A workload is intense, a quality is uncontrollable, and the process is hazardous to personnel health.

An automatic grinding system for carbon-fiber composite materials and corresponding parameters for a grinding process are discloses in "Research on Robotic Grinding Process for Carbon Fiber Composite Material", which is published on Science Technology and Engineering, Volume 16, Issue 15 in May 2016. Hardware components of the system include a 6-axis KUKA industrial robot KR60-3, a compliant constant-force controller Pushcorp AFD71, an Ingersoll Rand pneumatic motor 4800D, and a grinding head. The automatic grinding system works stably, and overcomes shortcomings such as an unstable quality and a poor grinding environment of the traditional grinding system. The system is deficient in two aspects. One is adopting an industrial robot, thereby additional measures for safety protection are required, and the system is poor in flexibility and cooperation. Another is no disclosure regarding facilities for dust removal and cleaning.

Chinese Patent Application No.CN201711495033.8 discloses a system and a method for controlling robot grinding. The system includes: a line-laser sensor that scans to obtain structural parameters of grinding workpiece; a 3D-model building module that establishes a 3D model of the grinding workpiece; a grinding-region generating module that obtains a 3D model of a grinding region according to a CAD model; a grinding-trajectory generating module that generates a grinding trajectory in the grinding region and a grinding force at corresponding points along the trajectory; a simulating module that simulates grinding of the 3D robot according to the grinding trajectory and the grinding force at corresponding points along the trajectory; a trajectory optimizing module that optimizes the generated grinding trajectory and the grinding force at corresponding points along the trajectory; and a robot controller that controls the robot to grind according to the optimized grinding trajectory and the grinding force of at corresponding points along the trajectory. The grinding trajectory is automatically planned according to the model of the grinding region which is automatically obtain. A process of planning the grinding trajectory is based on a force control, which corrects a location of an end of the robot. Grinding accuracy is improved, and the system can be applied to complex workpieces. The system is deficient in two aspects. One is mainly focusing on deburring die-castings and other metal parts, and the system is not suitable for removing and grinding composite materials. Another is mere disclosure of the system for controlling robot grinding, and lacking disclosure of an overall structure and implementation details of an automatic grinding apparatus.

Chinese Patent Application No.CN201910524443.3 discloses a flexible and intelligent robot grinding system based on a six-axis force sensor. The system includes a teach pendant, a robot controller, a robot, a six-axis force sensor, a grinding apparatus, etc. The six-axis force sensor is mounted on an end of the robot, and the grinding apparatus is connected to another end of the six-axis force sensor. Before grinding, a 2D grinding region is defined via a box through dragging operations on the teach pendant, and a 3D grinding trajectory is scanned through slow simulation. During the grinding, the force sensor feeds back in real time a grinding force and a relative attitude of the grinding apparatus with respect to a grinded surface, and the robot controller adjusts the attitude to implement the grinding. Such document implements the flexible grinding without offline programming, a vision system, or a 3D scanning system. A whole range of curvature is covered at a site of the grinding by suing real-time force control, which facilitates simple operation and convenient maintenance. The system is deficient in two aspects. One is merely using dragging operations on the teach pendant for trajectory planning, and accuracy of the trajectory is unsatisfactory. Another is no detailed disclosure of the grinding apparatus, and complicated operations in case of large curvature. Therefore, it is of great significance to provide an apparatus for grinding automatically and flexibly a composite material for aircraft repair and a method for applying the apparatus.

### SUMMARY

An apparatus for grinding automatically and flexibly a composite material for aircraft repair, and a method for applying the apparatus, are provided according to embodiments of the present disclosure. Operation processes involved in repairing composite materials, such as grinding, removal, and polishing, are automated or semi-automated. Manual workload is lessened, health hazards of the personnel are reduced, and a quality of repair is improved.

Following technical solutions are provided according to embodiments of the present disclosure to address the above issues.

An apparatus for grinding automatically and flexibly a composite material for aircraft repair is provided according to an embodiment of the present disclosure. The apparatus includes: a movable platform with a frame and supporting plates, a collaborative robot mounted on the movable platform, a floating force-sensitive grinding head mechanism mounted at an end of the collaborative robot, a dust collector mounted on the movable platform, and a control component; where:
the collaborative robot includes: a six-axis mechanical arm mounted on a top one of the supporting plates, a six-axis force sensor mounted at an end of the six-axis mechanical arm, and a robot controller and a teach pendant that are mounted on a bottom one of the supporting plates;
the floating force-sensitive grinding head mechanism is mounted on the six-axis force sensor, and includes: a floating constant-force apparatus, a pneumatic spindle, an interface for mounting a cutter and automatically switching cutters, and a cutter holder which is mounted at a bottom of the interface and provided with a grinding wheel and a sandpaper;
the dust collector includes a dust-collecting host located at the bottom supporting plate, and a dust-collecting hood which is connected to the dust-collecting host via a dust-collecting pipe fixed on the six-axis mechanical arm, where the dust-collecting hood is mounted on the end of the six-axis mechanical arm, and surrounds the floating force-sensitive grinding head mechanism;
the dust-collecting hood is of an elastic cone structure made of a transparent plastic film, unidirectional holes for guiding air into the dust-collecting hood are uniformly distributed on an outer surface of the dust-collecting hood, a rubber strip is mounted at an edge of the dust-collecting hood, a mounting hole for the floating force-sensitive grinding head mechanism is provided at a top of the dust-collecting hood, an entry of the mounting hole is capable to be tightened, and a connector for connecting the dust-collecting pipe outside the dust-collecting hood runs through dust-collecting hood; and
the control component includes an upper computer and a human-machine interface, the human-machine interface includes a screen, a keyboard, a mouse, and a master control panel, and the upper computer communicates with and controls the robot controller, the floating force-sensitive grinding head mechanism, and the dust-collecting host.

In an embodiment, a line-laser sensor is mounted on the six-axis force sensor, where the line-laser sensor communicates with the upper computer and is controlled by the upper computer.

In an embodiment, a handle is arranged at a side of the movable platform, and casters and an adjustable support are arranged at a bottom of the movable platform.

A method for applying an apparatus for grinding automatically and flexibly a composite material for aircraft repair is provided, including:
step S01: moving the apparatus to a grinding site by using the handle, where the adjustable support is lifted, and the casters are unlocked;
step S02: stabilizing the apparatus, where the adjustable support is adjusted to lift the movable platform up and ensure the apparatus being stabilized;
step S03: supplying power and gas to the apparatus, where an external power supply and an external gas supply are connected to the apparatus, and the collaborative robot and the upper computer are activated via the human-machine interface;
step S04: adjusting a grinding position in coarse control, in which a grinding region and a spatial attitude of the six-axis mechanical arm is preliminarily determined through a function of the collaborative robot, where the collaborative robot is taught through a dragging operation in the function;
step S05: adjusting the grinding position in fine control, in which a workpiece that is to be grinded is scanned by the line-laser sensor to obtain a surface model of the workpiece, and an accurate grinding trajectory is generated in the upper computer based on the surface model;
step S06: configuring a grinding control program, where multiple force-control parameters of the floating force-sensitive grinding head mechanism are set, and multiple grinding procedures are configured;
step S07: mounting the dust-collecting hood and attaching the dust-collecting hood to a surface of the workpiece, where the dust-collecting hood is mounted at the end of the collaborative robot and surrounds the floating force-sensitive grinding head, and the rubber strip at the edge of the hood abuts the surface of the grinding workpiece, forming a closed space preventing grind dusts from diffusing;
step S08: grinding according to the grinding trajectory, which includes: starting the dust-collecting host, and executing the grinding procedures by the floating force-sensitive grinding head mechanism and the collaborative robot according to the generated grinding trajectory;
step S09: powering off the apparatus after the grinding procedures are completed, where the collaborative robot, the floating force-sensitive grinding head mechanism, and the dust-collecting host are powered off after the grinding procedures are executed, and
step S10: checking a result of grinding, where the dust-collecting hood is removed to check the result.

In an embodiment, the steps S04 to S10 may be repeated, or a plan of repeating the grinding trajectory may be set when configuring the grinding control program in the step S06, in a case that successive grinding is required.

Embodiments of the present disclosure achieve following beneficial effects in comparison with conventional technology.

In a first aspect, a structure of a mechanism executing the grinding adopts the collaborative robot according to embodiments of the present disclosure. Safety, collaboration ability, and usability of the apparatus are greatly improved. Operations involved in repairing the composite material, such as grinding, removal, and polishing, are efficiently automated or semi-automated. Manual workload is lessened.

In a second aspect, the grinding head achieves fast rough adjustment on the grinding region and the attitude of the mechanical arm in conjunction with the drag-to-teach function according to embodiments of the present disclosure. The surface model of the workpiece is quickly obtained via the line-laser sensor, so as to generate the accurate grinding trajectory. Thereby, requirements of the composite material on rapid, accurate, and elaborate repair and grinding are met.

In a third aspect, the dust-collecting hood adopts a cone structure including a detachable side seal, according to embodiments of the present disclosure. A body of the hood is made of a transparent plastic film, and is provided with lots of unidirectional holes guiding the air inward. An edge of the hood is provided with a rubber strip. Scraps, dusts, and powder flow are collected with high efficiency during the grinding. Diffusion and pollution of the grinding dusts and powder are effectively prevented.

In a fourth aspect, the movable platform is provided with the adjustable support, the casters and the handle according to embodiments of the present disclosure. Hence the apparatus is convenient to move, and is highly secure and stable in operation.

In a fifth aspect, the apparatus integrates a movable platform and an apparatus for dust collection and dust removal, according to embodiments of the present disclosure. Hence, the apparatus facilitates on-site deployment and adjustment, and reduces health hazards of the personnel.

It is appreciated that a product as an implementation of the present disclosure is not necessary to achieve all the above advantages.

### BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a schematic structural diagram of an apparatus for grinding automatically and flexibly a composite material for aircraft repair, without a dust-collecting hood, according to an embodiment of the present disclosure;
Figure 2 is a schematic structural diagram of a dust-collecting hood in an apparatus for grinding automatically and flexibly a composite material for aircraft repair according to an embodiment of the present disclosure; and
Figure 3 is a flow chart of a method for applying an apparatus for grinding automatically and flexibly a composite material for aircraft repair according to an embodiment of the present disclosure.

### Reference numerals:

| | |
|---|---|
| 1: adjustable support, | 2: casters, |
| 3: movable platform, | 4: teach pendant, |
| 5: robot controller, | 6: handle, |
| 7: upper computer, | 8: mouse, |
| 9: keyboard, | 10: screen, |
| 11: master control panel, | 12: six-axis mechanical arm, |
| 13: six-axis force sensor, | 14: line-laser sensor, |
| 15: floating constant-force apparatus, | 16: pneumatic spindle, |
| 17: interface for mounting a cutter, | 18: cutter holder, |
| 19: dust-collecting host, | 20: dust-collecting hood, |
| 21: mounting hole for the floating force-sensitive grinding head mechanism; | |
| 22: connector for a dust-collecting pipe, | 23: rubber strip, |
| 24: unidirectional hole for guiding air. | |

### DETAILED DESCRIPTION OF EMBODIMENTS

In order to help those skilled in the art better understand solutions of the present disclosure, hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Herein the terms indicating orientation or a positional relationship, such as "an end", "a top", "a bottom", "a terminal", "inward", and "an outer surface", are only intended to facilitate and simplify description of the present disclosure, instead of indicating or implying that the referred components or elements is of specific orientation, is constructed under specific orientation, or is operated in specific orientation. Therefore, such terms should not be understood as a limitation to the present disclosure.

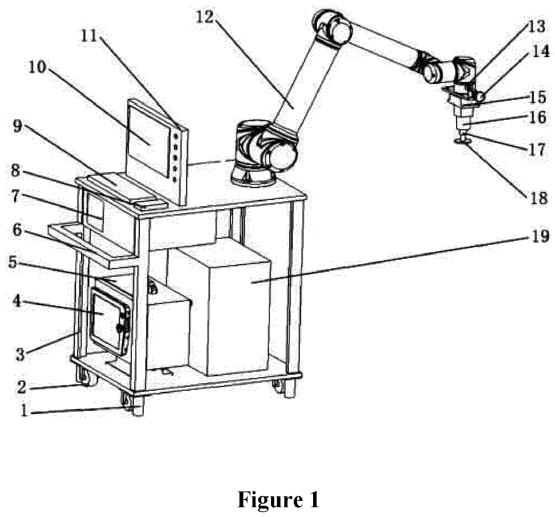

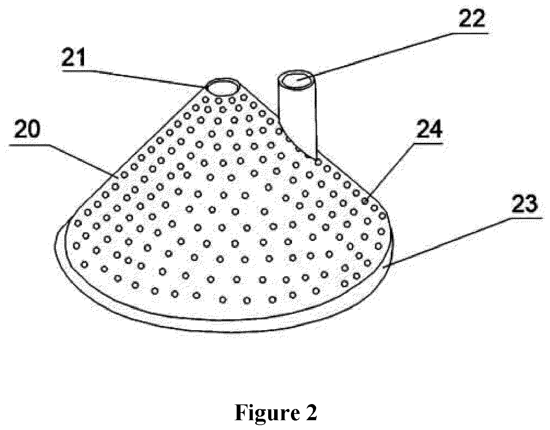

References are made to Figure 1 and Figure 2. An apparatus for grinding automatically and flexibly a composite material for aircraft repair includes: a movable platform 3 with a frame and supporting plates, a collaborative robot mounted on the movable platform 3, a floating force-sensitive grinding head mechanism mounted at an end of the collaborative robot, a dust collector mounted on the movable platform 3, and a control component. The collaborative robot includes: a six-axis mechanical arm 12 mounted on a top one of the supporting plates, a six-axis force sensor 13 mounted at an end of the six-axis mechanical arm 12, and a robot controller 5 and a teach pendant 4 that are mounted on a bottom one of the supporting plates. The six-axis force sensor 13 is configured to implement teaching through dragging operations, and implement collision detection at the end of the six-axis mechanical arm 12, so as to improve the usability, collaboration ability, and safety of the grinding apparatus. The robot controller 5 and the teach pendant 4 match with the collaborative robot.

The floating force-sensitive grinding head mechanism is mounted on the six-axis force sensor 13, and includes: a floating constant-force apparatus 15, a pneumatic spindle 16, an interface 17 for mounting a cutter and automatically switching cutters, and a cutter holder 18 which is mounted at a bottom of the interface and provided with a grinding wheel and a sandpaper. Thereby, requirements on grinding with different parameters are met. The floating constant-force apparatus 15 may enable the grinding head to float under a constant force along an axial direction or a radial direction, so as to ensure precision in grinding. The pneumatic spindle 16 is pneumatically driven, and power of grinding may be adjusted through air pressure.

The dust collector includes a dust-collecting host 19 located at the bottom supporting plate of the movable platform 3, and a dust-collecting hood 20 which is connected to the dust-collecting host 19 via a dust-collecting pipe fixed on the six-axis mechanical arm 12. The dust-collecting hood 20 is mounted on the end of the six-axis mechanical arm 12, and surrounds the floating force-sensitive grinding head mechanism. An end of the dust-collecting pipe is connected to the dust-collecting host 19, and the other end of the dust-collecting pipe is connected to the dust-collecting hood 20. The dust-collecting pipe is fixed on the six-axis mechanical arm 12. The dust-collecting pipe is configured to collect and transmit grinding dusts.

The dust-collecting hood 20 adopts an elastic cone structure made of a transparent plastic film, facilitating inspecting grinding states inside. Unidirectional holes 24 for guiding air into the hood 20 from outside are uniformly distributed on an outer surface of the dust-collecting hood. The unidirectional hole 24 guides the air outside the hood 20 into the hood 20, so as to facilitate the upper computer 19 collecting the grinding dusts. A rubber strip 23 is mounted at an edge of the hood. The rubber strip 23 is detachable, and may be attached on a surface of the grinding workpiece to form a closed space. Thereby, diffusion of the dusts are prevented, and assembly and disassembly are facilitated. A mounting hole 21 for the floating force-sensitive grinding head mechanism is provided at a top of the hood. An entry of the mounting hole is capable to be tightened, which means that an opening may be contracted or bound, facilitating fixing the hood to the floating force-sensitive grinding head mechanism. A connector 22 for connecting the dust-collecting pipe outside the dust-collecting hood runs through dust-collecting hood, so that the dust-collecting host 19 pumps the dusts generated in the hood 20 via the pipe.

The control component includes an upper computer 7, and a human-machine interface. The human-machine interface includes a screen 10, a keyboard 9, a mouse 8, and a master control panel 11. The human-machine interface is configured to implement integral control of an operator on the entire grinding apparatus. The upper computer 7 communicates with and controls the robot controller 5, the floating force-sensitive grinding head mechanism, and the dust-collecting host 19.

In an embodiment, a line-laser sensor 14 is mounted on the six-axis force sensor 13. The line-laser sensor 14 communicates with the upper computer 7 and is controlled by the upper computer 7. The line-laser sensor 14 is configured to scan a workpiece that is to be grinded, to obtain a surface model of the workpiece.

A handle 6 is arranged at a side of the movable platform 3, and casters 2 and an adjustable support 1 are arranged at a bottom of the movable platform 3. The dust-collecting host 19 is integrated on the movable platform 3, so as to move along with the entire grinding apparatus and facilitate switching to another site. When switching to another site, the adjustable support 1 are lifted, and casters 2 are unlocked, and the apparatus is moved by using the handle 6. When operating, the adjustable support 1 is adjusted to lift up the movable platform 3, so as to ensure stability of the apparatus.

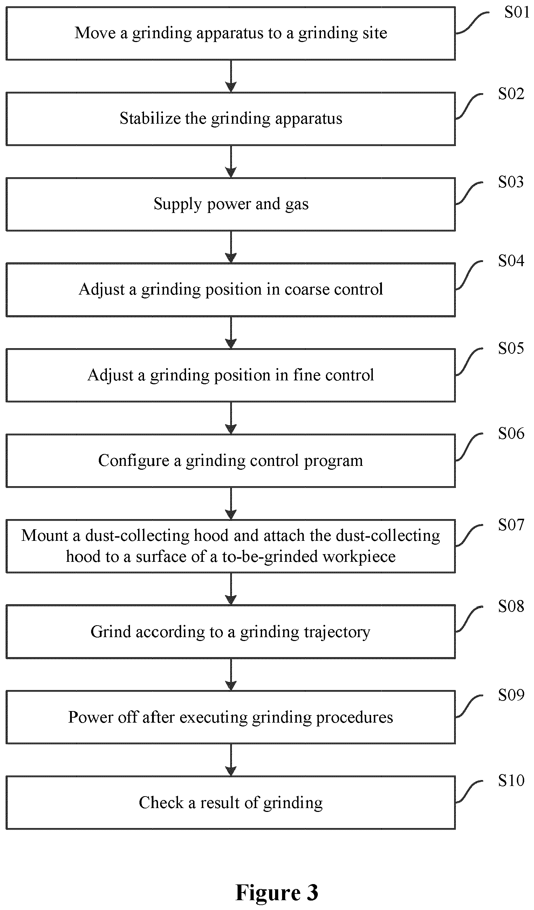

Reference is made to Figure 3. A method for applying an apparatus for grinding automatically and flexibly a composite material for aircraft repair includes steps S01 to S10.

In step S01, the grinding apparatus is moved to a grinding site. The adjustable support 1 is lifted, and the casters 2 are unlocked. The apparatus is moved by using the handle 6 to the site at which the grinding is to be performed.

In step S02, the grinding apparatus is stabilized. The supporting feet 1 is adjusted to lift the movable platform 3 up, so as to ensure stability of the apparatus.

In step S03, power and gas are supplied to the apparatus. An external power supply and an external gas supply are connected to the apparatus. The collaborative robot and the upper computer 7 are activated via the human-machine interface.

In step S04, a grinding position is adjusted in coarse control. In the coarse control, a grinding region and a spatial attitude of the six-axis mechanical arm is preliminarily determined through a function of the collaborative robot. The collaborative robot is taught through a dragging operation in the function.

In step S05, the grinding position is adjusted in fine control. In the fine control, a workpiece that is to be grinded is scanned by the line-laser sensor 14, to obtain a surface model of the workpiece. An accurate grinding trajectory is generated in the upper computer 7 based on the surface model. Namely, in the upper computer 7, the surface model obtained by the line-laser sensor 14 scanning is transformed based on the spatial attitude of the robot obtained in the step S04. Thereby, data of the surface model is obtained based on a robotic coordinating system. A grinding mechanism and grinding parameters are set for the surface, and then the accurate grinding trajectory is generated.

In step S06, a grinding control program is configured. Multiple force-control parameters of the floating force-sensitive grinding head mechanism are set, and multiple grinding procedures are configured.

In step S07, the dust-collecting hood are mounted and attached to a surface of the workpiece. The dust-collecting hood 20 is mounted at the end of the collaborative robot and surrounds the floating force-sensitive grinding head. The rubber strip at the edge of the hood abuts the surface of the grinding workpiece. Thereby, a closed space is formed to prevent grind dusts from diffusing.

In step S08, grinding is performed according to the grinding trajectory. The dust-collecting host 19 is started, and floating force-sensitive grinding head mechanism and the collaborative robot execute the grinding procedures according to the generated grinding traj ectory.

In step S09, the grinding apparatus is powered off after the grinding procedures are completed. The collaborative robot, the floating force-sensitive grinding head mechanism, and the dust-collecting host 19 are powered off after the grinding procedures are executed

In step S10, a result of grinding is checked. The dust-collecting hood 20 is removed to check the grinding result.

In an embodiment, the steps S04 to S 10 may be repeated, or a plan of repeating the grinding trajectory may be set when configuring the grinding control program in the step S06, in a case that successive grinding is required.

Embodiments of the present disclosure achieve following beneficial effects in comparison with conventional technology.

In a first aspect, a structure of a mechanism executing the grinding adopts the collaborative robot according to embodiments of the present disclosure. Safety, collaboration ability, and usability of the apparatus are greatly improved. Operations involved in repairing the composite material, such as grinding, removal, and polishing, are efficiently automated or semi-automated. Manual workload is lessened.

In a second aspect, the grinding head achieves fast rough adjustment on the grinding region and the attitude of the mechanical arm in conjunction with the drag-to-teach function according to embodiments of the present disclosure. The surface model of the workpiece is quickly obtained via the line-laser sensor, so as to generate the accurate grinding trajectory. Thereby, requirements of the composite material on rapid, accurate, and elaborate repair and grinding are met.

In a third aspect, the dust-collecting hood adopts a cone structure including a detachable side seal, according to embodiments of the present disclosure. A body of the hood is made of a transparent plastic film, and is provided with lots of unidirectional holes guiding the air inward. An edge of the hood is provided with a rubber strip. Scraps, dusts, and powder flow are collected with high efficiency during the grinding. Diffusion and pollution of the grinding dusts and powder are effectively prevented.

In a fourth aspect, the movable platform is provided with the adjustable support, the casters and the handle according to embodiments of the present disclosure. Hence the apparatus is convenient to move, and is highly secure and stable in operation.

In a fifth aspect, the apparatus integrates a movable platform and an apparatus for dust collection and dust removal, according to embodiments of the present disclosure. Hence, the apparatus facilitates on-site deployment and adjustment, and reduces health hazards of the personnel.

The preferable embodiments described above are merely intended to help explain the present disclosure. These preferable embodiments neither describe all the details nor limit the present disclosure to specific implementations. It is apparent that many modifications and variations can be made according to the content of the description. The embodiments that are selected and specifically described herein are intended to explain principles and practical applications of the present disclosure better, so that those skilled in the art can understand and utilize the present disclosure well. The present disclosure is only limited by the claims, a full scope of the claims, and equivalents thereof.

## Claims

1. An apparatus for grinding automatically and flexibly a composite material for aircraft repair, comprising:
a movable platform (3) with a frame and supporting plates, a collaborative robot mounted on the movable platform (3), a floating force-sensitive grinding head mechanism mounted at an end of the collaborative robot, a dust collector mounted on the movable platform (3), and a control component; wherein:
the collaborative robot comprises: a six-axis mechanical arm (12) mounted on a top one of the supporting plates, a six-axis force sensor (13) mounted at an end of the six-axis mechanical arm (12), and a robot controller (5) and a teach pendant (4) that are mounted on a bottom one of the supporting plates;
the floating force-sensitive grinding head mechanism is mounted on the six-axis force sensor (13), and comprises: a floating constant-force apparatus (15), a pneumatic spindle (16), an interface (17) for mounting a cutter and automatically switching cutters, and a cutter holder (18) which is mounted at a bottom of the interface (17) and provided with a grinding wheel and a sandpaper;
the dust collector comprises a dust-collecting host (19) located at the bottom supporting plate, and a dust-collecting hood (20) which is connected to the dust-collecting host (19) via a dust-collecting pipe fixed on the six-axis mechanical arm (12), wherein the dust-collecting hood (20) is mounted on the end of the six-axis mechanical arm (12), and surrounds the floating force-sensitive grinding head mechanism;
the dust-collecting hood (20) is of an elastic cone structure made of a transparent plastic film, unidirectional holes (20) for guiding air into the dust-collecting hood are uniformly distributed on an outer surface of the dust-collecting hood (20), a rubber strip (23) is mounted at an edge of the dust-collecting hood (20), a mounting hole (21) for the floating force-sensitive grinding head mechanism is provided at a top of the dust-collecting hood (20), an entry of the mounting hole (21) is capable to be tightened, and a connector (22) for connecting the dust-collecting pipe outside the dust-collecting hood (20) runs through dust-collecting hood (20); and
the control component comprises an upper computer (7) and a human-machine interface, the human-machine interface comprises a screen (10), a keyboard (9), a mouse (8), and a master control panel (11), and the upper computer (7) communicates with and controls the robot controller (5), the floating force-sensitive grinding head mechanism, and the dust-collecting host (19).

2. The apparatus according to claim 1, wherein a line-laser sensor (14) is mounted on the six-axis force sensor (13), and the line-laser sensor (14) communicates with the upper computer (7) and is controlled by the upper computer (7).

3. The apparatus according to claim 1, wherein a handle (6) is arranged at a side of the movable platform (3), and casters (2) and an adjustable support (1) are arranged at a bottom of the movable platform (3).

4. A method for applying the apparatus according to any one of claims 1 to 3, comprising:
step S01: moving the apparatus to a grinding site by using the handle (6), wherein the adjustable support (1) is lifted, and the casters (2) are unlocked;
step S02: stabilizing the apparatus, wherein the adjustable support (1) is adjusted to lift the movable platform (3) up and ensure the apparatus being stabilized;
step S03: supplying power and gas to the apparatus, wherein an external power supply and an external gas supply are connected to the apparatus, and the collaborative robot and the upper computer (7) are activated via the human-machine interface;
step S04: adjusting a grinding position in coarse control, in which a grinding region and a spatial attitude of the six-axis mechanical arm (12) is preliminarily determined through a function of the collaborative robot, wherein the collaborative robot is taught through a dragging operation in the function;
step S05: adjusting the grinding position in fine control, in which a workpiece that is to be grinded is scanned by the line-laser sensor (14) to obtain a surface model of the workpiece, and an accurate grinding trajectory is generated in the upper computer (7) based on the surface model;
step S06: configuring a grinding control program, wherein a plurality of force-control parameters of the floating force-sensitive grinding head mechanism are set, and a plurality of grinding procedures are configured;
step S07: mounting the dust-collecting hood and attaching the dust-collecting hood (20) to a surface of the workpiece, wherein the dust-collecting hood (20) is mounted at the end of the collaborative robot and surrounds the floating force-sensitive grinding head, and the rubber strip (23) at the edge of the hood abuts the surface of the grinding workpiece, forming a closed space preventing grind dusts from diffusing;
step S08: grinding according to the grinding trajectory, which comprises: starting the dust-collecting host (19), and executing the grinding procedures by the floating force-sensitive grinding head mechanism and the collaborative robot according to the generated grinding trajectory;
step S09: powering off the apparatus after the grinding procedures are completed, wherein the collaborative robot, the floating force-sensitive grinding head mechanism, and the dust-collecting host (19) are powered off after the grinding procedures are executed, and
step S10: checking a result of grinding, wherein the dust-collecting hood (20) is removed to check the result.

5. The method according to claim 4, wherein:
the steps S04 to S10 is repeated, or a plan of repeating the grinding trajectory is set when configuring the grinding control program in the step S06, in a case that successive grinding is required.
